# EUROPEAN PATENT SPECIFICATION

(11) **EP 2 670 506 B1**
(45) Date of publication and mention of the grant of the patent: **22.04.2015**
(21) Application number: 12704129.1
(22) Date of filing: 24.01.2012
(51) Int. Cl.: B01D 29/11, B01D 29/68

(54) **REVERSIBLE-FLOW FILTER WITH SCAVENGING DEVICE**
RÜCKSPÜLFILTER MIT SPÜLUNGSVORRICHTUNG
FILTRE À FLUX RÉVERSIBLE AVEC DISPOSITIF ABSORBEUR

(30) Priority: 04.02.2011 DE 202011000268 U
(43) Date of publication of application: 11.12.2013
(73) Proprietor: Boll & Kirch Filterbau GmbH, 50170 Kerpen (DE)
(72) Inventor: CARTARIUS, Karsten, 52391 Vettweiß (DE); ROTT, Willi, 53332 Bornheim (DE)
(74) Representative: Althaus, Arndt
(86) International application number: PCT/IB2012/050327
(87) International publication number: WO 2012/104746

(56) References cited:
- DE-A1- 3 611 075
- DE-A1- 4 206 282
- DE-A1- 4 208 743
- US-A- 2 275 958

## Description

The invention relates to reversible-flow filters with a filter housing, with an inlet for unfiltered fluid, with a filter insert arranged in the filter housing and having a cylindrical filter wall, the inner space of the said filter insert being connected to the fluid inlet, with an outlet for filtered fluid, and with a backwash device which is arranged in the inner space of the filter insert and is rotatable about the axis of the filter insert and which has a backwash body with a washing gap, preferably reaching near to the surface of the filter wall, for cleaning off the inside of the filter wall in backwash operation, the backwash device being coupled at one of its axial ends to a rotary drive and being connected with its other axial end to a sludge discharge.

Reversible-flow filters, consequently filters with a backwash device, by means of which the filter medium used for filtering the fluid can be purified, and therefore backwashed, preferably without the filtering operation being interrupted, have been known for many years. For backwashing, a scavenging gas or the like may be used, or the reversible-flow filters may use for the backwashing action an inherent medium, in particular filtered fluid, which is routed through the filter wall in countercurrent to the filtering direction, in order to release dirt particles on the dirty side of the filter wall. Backwashing with an inherent medium may also be reinforced by the action of scavenging gas.

Automatic filters with a backwash device may have a multiplicity of filter candles which are backwashed separately, in which case a relatively large filter area in the filter housing can be accommodated due to the multiplicity of filter candles. WO 01/89658 A1 shows, for example, a reversible-flow filter with filter candles which are backwashed, offset in time, at one or the other of the filter-candle ends, in order to improve the backwash effect on the filter wall.

Furthermore, reversible-flow filters constructed as ring-type screen filters are also known, which are provided with a filter insert, the circumferential wall of which forms the filter wall. In ring-type screen filters, it is possible to arrange the backwash body in the inner space of the filter insert, so as to suck away, relatively near to the filter wall, the foreign bodies which are filtered out during filtering operation. In ring-type screen filters, the available filter area depends on the overall height and/or the diameter of the filter insert.

A reversible-flow filter on which the precharacterizing clause of Claim 1 is based, with a backwash body arranged inside the filter insert and with a backwash gap extending uninterruptedly over the height of the filter wall, is known from DE 34 31 396 C2, and a reversible-flow filter with a washing gap interrupted over the height is known from DE 34 43 752 A1. All the washing gaps extend near to the filter wall in order to suck away locally the dirt particles which have been deposited there.

Whereas in reversible-flow filters with filter candles which are attacked by the flow and cleaned off via the candle ends, even relatively large dirt particles present no problems, in ring-type screen filters deposits caused by algae or other larger dirt particles which are not sluiced out through the washing gap running past close to the filter wall may lead, when corresponding reversible-flow filters are used continuously, to problems which make it necessary for the reversible-flow filters to be shut down and recleaned.

Document US 2275 958 discloses a filter with a rotatable scavenging member wich has a narrow backwash inlet opposed to the openings of the straining member adapted to admit only a backwash of the strained fluid and adjacent to it a larger opening between the scrapping shoe and a forward wall closed by a door to permit the disposal of the sludge.

Document DE 3611075 discloses a vertical cylinder filter for fluids with a back-wash inside the filter insert cage which is motor driven. It consists of a narrow chamber extending the total height of the filter surface and is attached to, and encloses, the hollow central drive shaft. Filtered fluid, under discharge pressure, is forced back through the filter, insert through the narrow slot in the vertical contoured edge of the back-wash arm, and via the back-wash chamber through vertical slots in the hollow drive shaft to the waste line.

The object of the invention is to provide a reversible-flow filter having a ring-type screen filter insert, in which the abovementioned disadvantages do not arise.

This and further objects are achieved by means of the invention in that the backwash bodies provided with a suckaway slot which can be opened into the inner space and is separate from the washing gap and the opening cross section of which is larger than the opening cross section of the washing gap, and in that the backwash device has a hollow shaft which is at least partially movable in relation to the backwash body and is rotatable about the axis of rotation by means of the rotary drive and via which the washing gap or the suckaway slot can be connected or is connected to the sludge discharge as a function of the relative position between the backwash body and hollow shaft.

In the reversible-flow filter according to the invention, therefore, two orifices with different dimensions are provided in the filter inner space for the backwashing of the filter insert, to be precise, on the one hand, a washing gap which in a way known per se cleans off the filter medium near the filter wall, especially in the same way as a filter screen, locally in countercurrent at a high flow velocity, and, on the other hand, a suckaway slot which, however, is connected to the sludge discharge solely in the case of a stipulated relative position between the backwash body, on the one hand, and the hollow shaft, on the other hand, and via which deposits in the inner space can be sucked away or transported away from the filter insert. Since the suckaway slot which has larger dimensions than the washing gap is present, on the one hand, the washing gap itself can be reduced, since the task of the washing gap can be concentrated or restricted to cleaning off the filter wall in countercurrent, while all other impurities which have penetrated into the filter inner space and/or have formed there over a relatively lengthy operating period, such as, for example, algae in water filtration, can be sluiced out of the filter inner space through the suckaway slot which, where appropriate, is considerably larger.

The absolute size of the washing gap and the ratio of the size of the washing gap to the size of the suckaway slot can, in principle, be adapted, as desired, to the intended use of the reversible-flow filter. Especially advantageously, the ratios of the opening cross sections of the suckaway slot to those of the washing gap may prove to be those in which the suckaway slot has a more than two, preferably more than three and especially more than five times larger opening cross section than the washing gap. While the washing gap preferably extends parallel to the axis of rotation over the height of the backwash body, at least in that region in which the filter wall has the filtering function of the reversible-flow filter is located, the suckaway slot may not only be wider, but also have a smaller height, as long as it is ensured that the suckaway slot or an inflow orifice for the suckaway slot can still be closed by means of the hollow shaft in the case of a specific relative position, so that only the washing gap is then acted upon.

According to an advantageous refinement of a backwash body, this may have a ring segment portion, which is preferably formed concentrically to the axis of rotation, for the rotatable reception of the hollow shaft, and also a box portion which projects radially from the said ring segment portion and on the end face of which the washing gap is formed. The distance between the axis of rotation and the filter wall can be bridged by the box portion, while, in principle, the ring segment portion may be formed directly adjacently to the hollow shaft and, in principle, receives the latter rotatably. The suckaway slot may be formed directly on the ring segment portion, according to a special advantageous refinement of the backwash body being formed symmetrically with respect to a mid-plane which passes through the axis of rotation. The hollow shaft preferably has at the circumference a segment cut-out, via which either the washing gap or the suckaway slot is connected or can be connected to the sludge discharge as a function of the relative position of the hollow shaft with respect to the backwash body. According to a special advantageous refinement, the clear width of the segment cut-out may be approximately equal to the clear width of the suckaway slot and to the clear width inside the wash body, the clear width preferably tapering (only) inside the box portion towards the washing gap.

In order to improve the cleaning action of the washing gap and for the cleaning-off of the filter wall, particularly in the above-described refinement of the backwash body, according to an especially advantageous refinement sealing lips and/or brush strips or the like may be arranged on the end face of the backwash body, preferably on the end face of the box portion, in particular on both sides of the washing gap, and touch the inside of the filter wall and thereby mechanically reinforce the fluidic or hydraulic backwashing action of the backwash device. Particularly when brush stripes are used, the suckaway slot has the further advantage that even the impurities released mechanically with the brush stripes outside the washing gap, and, when the backwash body is rotating, especially upstream of the washing gap in the direction of rotation, can be sucked away from the filter inner space.

According to an alternative refinement of a backwash body, the latter may have a segment portion, provided with the suckaway slot, for the rotatable reception of the hollow shaft, and a radially projecting box portion, on the end face of which the washing gap is formed. The outer contour of the segment portion may be approximately as desired, the axis of rotation of the hollow shaft preferably being positioned in the centre of the segment portion. It is especially advantageous for the backwashing and cleaning-off effect on the filter wall if the box portion has a first chamber wall and a second chamber wall, between the end faces of which the washing gap is formed, the end face of the first chamber wall extending at least partially with a subsection nearer to the surface of the filter wall than the end face of the other chamber wall. Backwashing is especially effective and intensive if the subsection forms a cross-flow run-in slope and/or the end face of the second chamber wall forms a first zone remote from the washing gap and a second zone near the washing gap, in which zone the distance to the surface of the filter wall is greater than on the subsection and smaller than in the first zone. Alternatively or additionally, the subsection and the second zone may delimit the washing gap and narrow it in relation to the distance between the chamber walls. As a result of the said measures on the end faces of the backwash body, each taken separately or altogether, an improved flow characteristic can be achieved in the gap between the backwash body and the surface of the filter wall and the Bernoulli effect can be utilized more effectively in order to improve the cleaning action.

It may be a further advantage in this case if a sealing lip and/or brush strip which touches the inside of the filter wall is arranged only on the end face of the first chamber wall, preferably laterally and outside the subsection.

So that a modular set-up of reversible-flow filters can be achieved and reversible-flow filters employ an identical technique to be implemented at different overall heights, it may be advantageous if the backwash body is composed of a plurality of backwash-body segments, each segment forming an axial subsection of the washing gap and of the suckaway slot. The segments can then be clamped between two cover plates, by means of which the inner region of the end segments and those of the suckaway slot and the washing gap are closed at the axial ends of the wash body. According to an especially advantageous refinement, the segments of the backwash body can then be penetrated by an anchor tube which is arranged parallel to the axis of rotation and in the ends of which tension screws for clamping the segments between the cover plates are screwed.

For rotary coupling between the hollow shaft and backwash body, it is especially advantageous if the hollow shaft is provided with a driving pin and the backwash body is provided with at least one driving nose. The driving nose may be formed, in particular, on one of the cover plates. In an especially advantageous concept, by a reversal in direction of the rotary drive, a variation in the relative position between the hollow shaft, on the one hand, and the backwash body, on the other hand, is initiated and achieved. For this purpose, the backwash body may have, for example, two driving noses and, in the case of a reversal in direction of rotation, the hollow shaft can be rotated by means of the driving pin partially between the driving noses, without the backwash body being driven. Depending on a configuration of the segment orifice in the hollow shaft, for example, a travel of 180° can be covered until the driving pin and driving nose come into contact again. A driving nose may consist correspondingly of any elevation or of any desired projection or the like. It may also consist of the respective opposite end edges of a body extending over a subarc. The driving pin and the driving noses may preferably be positioned outside the filter insert in a lid part of the filter housing.

Also preferably, the filter housing may be designed essentially cylindrically, the filter inlet being arranged at the bottom of the filter housing, the filtrate outlet on the circumference of the filter housing, the sludge discharge at the bottom of the filter housing in the centre of the filter inlet, and the rotary drive on the lid part of the filter housing.

Further advantages and refinements of a reversible-flow filter according to the invention may be gathered from the following description of an exemplary embodiment shown diagrammatically in the drawing. In the drawing:
**Fig. 1** shows an axial section through a reversible-flow filter according to the invention in the case of action upon a washing gap on the backwash body;
**Fig. 2** a sectional view along II-II in Fig. 1;
**Fig. 3** shows an axial section through a reversible-flow filter in the case of action upon a suckaway slot on the backwash body;
**Fig. 4** shows a sectional view along IV-IV in Fig. 3;
**Fig. 5** shows diagrammatically in three sequences, with reference to the driving pin and driving nose, the progress during a reversal in the direction of the rotary drive for the backwash device;
**Fig. 6** shows an exploded illustration of a preferred exemplary embodiment of a modularly constructed backwash body for a reversible-flow filter according to the invention; and
**Fig. 7** shows a sectional view, similar to Fig. 2, of a backwash body according to a second exemplary embodiment.

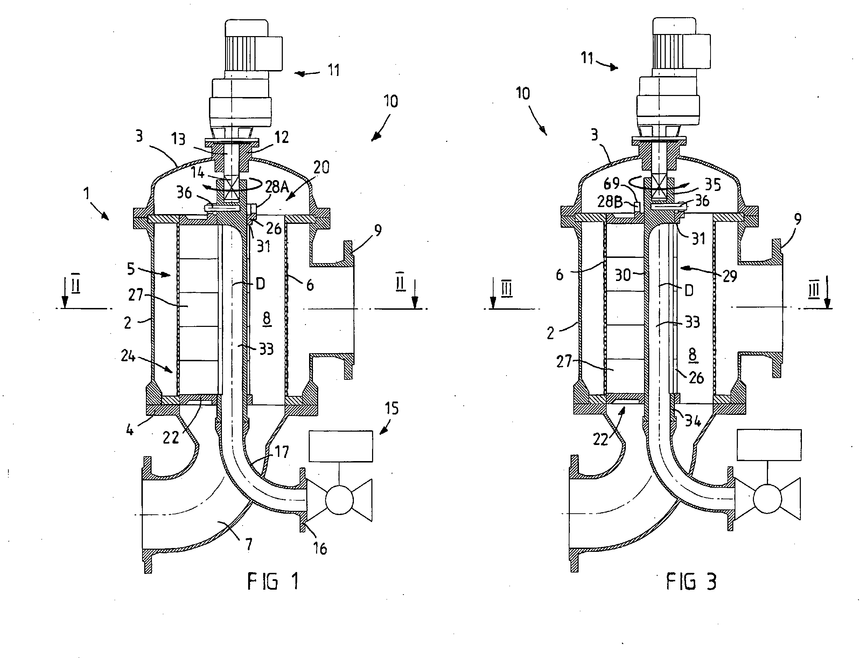

The reversible-flow filter, shown in Figs. 1 and 3 in a sectional view through the axis of rotation D and designated as a whole by reference symbol 10, has a multi-part filter housing 1 here with a cylindrical middle part 2, with a cover part 3 and with a bottom part 4. In the middle part 2 in the filter housing 1, a filter insert 5 is positioned concentrically with respect to the axis of rotation D, the cylindrical circumferential wall of which is provided with a suitable filter means, such as, for example, a filter cloth or filter screen, and correspondingly forms, for the fluid to be filtered, the filter wall 6 through which the fluid flows for filtration. In filtering operation, the fluid flows through the filter wall 6 of the filter insert 5 from the inside outwards, and the inflow of the dirty liquid to be filtered or of unfiltered fluid takes place via an inlet 7, designed here as an inflow bend, in the bottom part 4. The unfiltered fluid flows here from below into the inner space 8 of the filter insert 5 and, on account of its flow velocity and/or a pressure difference between the inlet 7 and outlet 9 of the reversible-flow filter 10, emerges as filtered fluid from the outlet 9 which is located on a subsection of the outer wall of the middle part 2. In the exemplary embodiment shown, the filter insert 6 is also open upwards, and therefore fluid to be filtered can also enter the inner region of the lid part 3 from the inner space 8. Furthermore, the reversible-flow filter also has a sludge discharge 16, to which a discharge valve 15 is connected and which, via a discharge bend 16 arranged at the centre of the inflow bend and emerging on the casing wall of the latter, can cause impurities released during backwashing to be sucked away, as is also explained.

A backwash device, designated as a whole by reference symbol 20, is positioned in the inner space 8 of the filter insert 6 and can be rotary-driven in rotation about the axis of rotation D by means of a rotary drive 11 which is connected via a connecting flange 12 to the lid part 3. The rotary drive 11 cooperates by means of a rotary journal 14 on its drive shaft 13, the rotary journal 14 being designed here as a square, with an upper axial end of the backwash device 20, in order to couple the backwash device 20 to the rotary drive 11, as will also be explained.

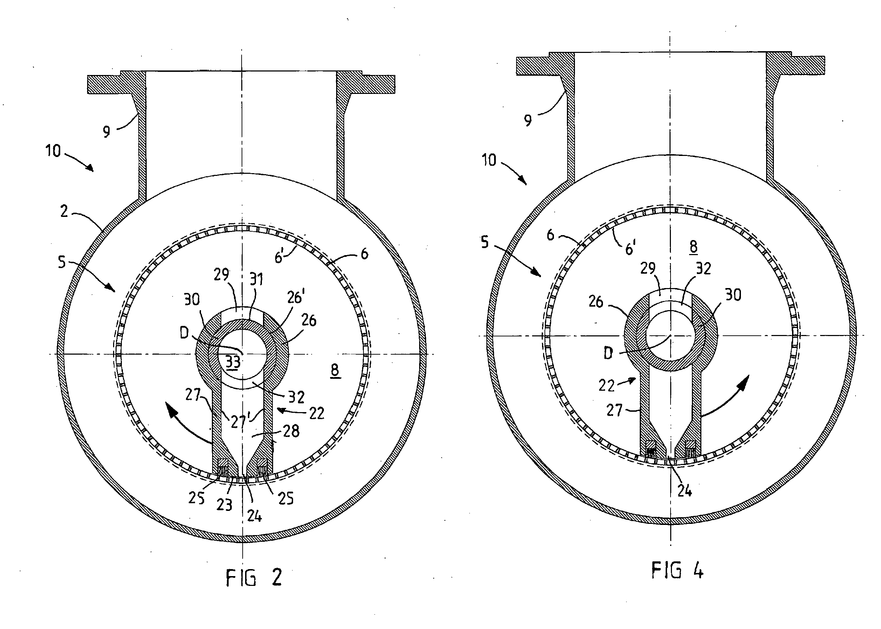

So that the filter wall 6 can be cleaned off partially on the dirty side by means of the backwash device 20 even while filtering operation is running, the backwash device 20 has a backwash body 22 which, as can be seen especially clearly in Fig. 2 and 4, reaches near to the inside 6' of the filter wall 6, the backwash body 22 being provided, on its end face 23 adjacent to the filter wall 6', with a relatively narrow washing gap 24 which extends parallel to the axis of rotation D and by means of which local cleaning-off of the filter means directly on the filter wall 6 takes place during rotation of the backwash body 22 in the direction of rotation shown in Fig. 2. Cleaning-off in this case takes place in countercurrent to the filtering direction, and the cleaning action at the washing gap 24 may be further improved, for example, by two brush strips 25 which are arranged on both sides of the washing gap 24 and are in touch contact with the inside 6' of the filter wall 6. By means of the brush strips 25, dirt particles filtered out from both sides of the washing gap and adhered onto the filter wall 6 can be released in both directions of rotation, and at the same time the brush strips prevent a bypass between the end face 23 of the backwash body 22 and the washing gap 24 while the filter wall 6 is being cleaned off hydraulically.

As can be seen clearly in Fig. 2, the backwash body 22 itself has a ring segment portion 26, which is formed essentially concentrically to the axis of rotation D, and a box portion 27 which projects radially on the said ring segment portion and which extends over an arc length of about 20° and reaches up to the inner wall 6' of the filter wall 6. The box portion 27 is provided on its end face 23 with the washing gap 24. The backwash body 22 is designed symmetrically with respect to a plane passing through the axis of rotation D and bisecting the washing gap 24, and the box portion 27 has, in the region of connection to the ring portion 26, an inner chamber 28, via which the fluid sucked in the washing gap 24 can be routed out of the backwash body 22 and transferred into the hollow chamber 33. The inner walls 27' of the chamber portion 27, which delimit the inner chamber 28, run parallel to one another over a relatively long radial substage (here about half the radius), before they taper here in a straight line towards the washing gap 24.

The ring segment portion 26 is provided furthermore, on the segment portion lying opposite the washing gap 24 and the region of connection of the box portion 27, with a relatively large orifice, the width of which corresponds here to the inner portion of the two chamber walls 27' of the box portion 27 at the widest point. This orifice, virtually on the rear side of the ring segment portion 26 in relation to the box portion 27, serves as a suckaway slot 29 for coarser impurities or agglomerates, and, in the exemplary embodiment shown, the width of this orifice, consequently of the suckaway slot 29, is about 5 times wider than the width of the washing gap 24. In the illustration according to Fig. 2, however, the suckaway slot 29 is momentarily closed by means of the annular wall 31 of a hollow shaft 30 which is arranged rotatably in relation to the wash body 22 in the inner cavity 26' of the ring segment portion 26 and which extends at least over the height of the backwash body 22. The hollow shaft 30 has in the annular wall 31 a segment cutout 32, the width of which corresponds here exactly to the width or clear width of the suckaway slot 29 and to the distance between the box walls 27' of the box portion 27 in the widest region in which they run parallel to one another. In the position shown in Fig. 2, the segment cutout 32 on the hollow shaft 30 lies congruently in alignment with the inner chamber 28, and therefore, in this relative position of the hollow shaft 30 with respect to the backwash body 22, the washing gap 24 is connected for backwashing operation, here the backwashing of the filter wall 6 in the region of the washing gap 24 on the inside 6', to a sludge discharge (16, Fig. 2) which is connected or can be connected to the cavity 33 of the hollow shaft. By the hollow shaft 30 and the wash body 22 being rotated in relation to one another through 180° the segment cutout 32 can be moved into the position shown in Fig. 4, in which it lies exactly in alignment with the suckaway slot 29, so that larger impurities can consequently be sucked away from the inner space 8 of the filter insert 5 via the suckaway slot 29.

By means of the backwash device 22 according to the invention, therefore, on the one hand, intensive cleaning-off of the filter wall 6 on the inside 6' in cross flow to the filtering direction can take place and, on the other hand, larger solid agglomerates, algae accumulations or the like can be transported away from the entire inner space 8 of the filter insert 5, without the filter housing having to be opened and/or a separate valve or the like having to be actuated, since the same line system (hollow shaft 30, sludge discharge 17) and the same discharge valve 15 flanged to the sludge discharge 16 can be used for the selective removal of dirt via the washing gap 24 or the suckaway slot 29.

Fig. 1 shows correspondingly the switching position of the hollow shaft 30 and backwash body 22 in the case of action upon the backwash gap 24, and Fig. 3 shows correspondingly the relative positions when the suckaway slot 31 is connected to the hollow portion 33 of the hollow shaft 30. In the exemplary embodiment shown, the hollow shaft 30 is open at its lower axial end 34 and is coupled at its upper end 35 to the rotary drive 11 releasably, but fixedly in terms of rotation. The lower axial end 34 of the hollow shaft 30 is connected to the discharge bend 17 which is located centrally inside the inflow bend for the inlet 7 and is routed partially out of the circumferential wall of the latter.

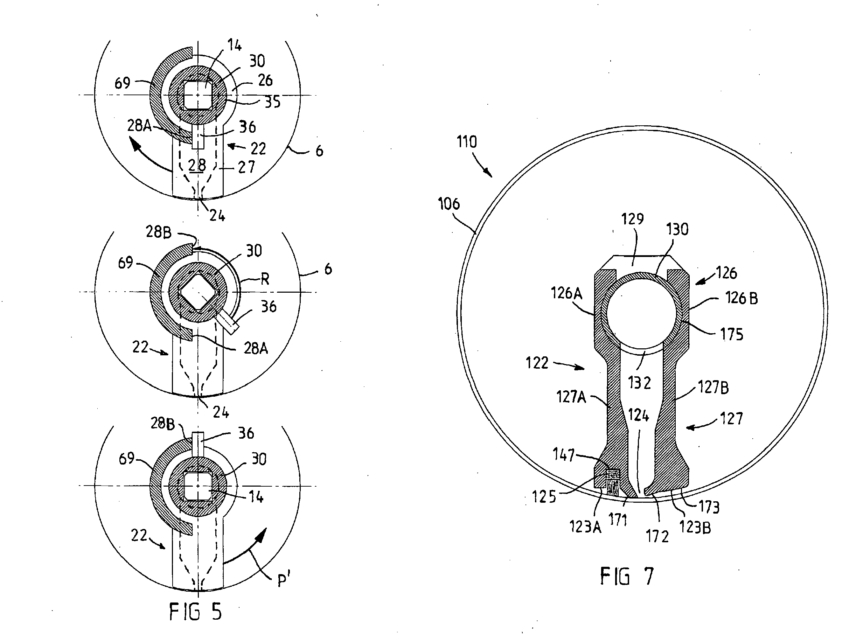

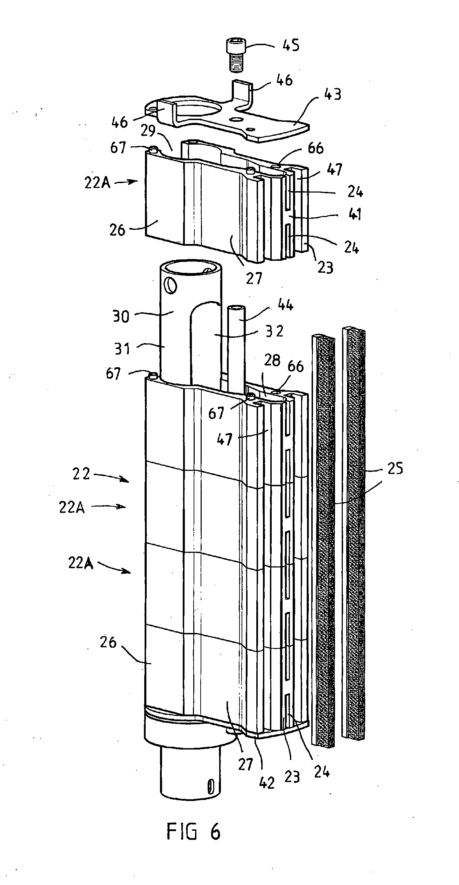

In the exemplary embodiment shown, a change in the relative position between the hollow shaft 30, on the one hand, and the backwash body 22, on the other hand, takes place by a reversal in the direction of rotation of the driven shaft 13 of the rotary drive 11. The upper axial end 35 of the hollow shaft is provided inside the lid part 3 with a radially projecting driving pin 36 which cooperates with driving surfaces 28A, 28B which are provided in the upper end region of the ring segment portion 26 of the backwash body 22. To explain the variation in the relative position of the hollow shaft 30 and backwash body 22 in the case of a reversal in direction of rotation, then, reference is made first to Fig. 5. The uppermost part-figure in Fig. 5 shows the rotary position of the backwash body 22 and hollow shaft 30 for suckaway operation on the filter wall 6 via the backwash gap 24. The driving pin 36, which is connected fixedly in terms of rotation to the upper axial end 35 of the hollow shaft 30 and projects radially, bears against a driving nose 28A formed by one end of a web-like half-ring 69 which is suitably connected fixedly in terms of rotation to the topside of the ring segment portion 26 of the backwash body and is located in the inner region of the lid portion 3 of the housing of the reversible-flow filter. During rotation of the rotary journal 13 in the direction of the arrow P, both the hollow shaft 30 and the half-ring web 69 are driven in the direction of rotation P shown, since the driving pin 36 bears against the stop 28A. As a result, the hollow shaft 30 and the backwash body 22 rotate in the direction of rotation P shown, and then, as explained above, the segment cutout of the hollow shaft is located so as to act upon the inner chamber 28 of the backwash body 22 and suckaway can take place at the suckaway slot 24. If, then, the direction of rotation of the rotary motor is changed, as is indicated in the middle part-figure of Fig. 6 by the arrow R, only the hollow shaft 30 is then temporarily moved. By contrast, the backwash body 22 remains in its position and is not driven, but instead only the relative position between the hollow shaft 30 and backwash body 22 is changed. The driving pin 36 can rotate freely, since the half-ring web 69 extends only over approximately 180° between the two driving noses 28A and 28B. During this transitional time, the washing gap is still initially connected partially to the hollow-chamber portion of the hollow shaft 30, until the driving pin 36 has passed the middle position between the two driving noses 28A, 28B. The discharge valve (15, Fig. 1) can be closed, so that backwashing temporarily does not take place. During the rotation of the hollow shaft 30 with respect to the backwash body 22, the suckaway slot (2, Fig. 2) on the ring segment portion 26 is gradually connected to the hollow portion 33 of the hollow shaft 30 and the washing gap is at the same time separated. After relative rotation of the hollow shaft 30 through 180°, the driving pin 36 comes into contact with the other limit stop 28B of the half-ring 69, the result of this being that the backwash body 22 is then rotated in the opposite direction P', specifically together with the hollow shaft 30, without the relative position changing. In this second relative end position, the suckaway slot 29 is opened completely. By the backwash body 22 being rotated further in the direction of the arrow P', this affords the particular advantage that the backwash brushes clean off the inside of the filter wall 6 mechanically in the opposite direction, and also the material released there can then be sucked away via the suckaway slot. Sucking away from the inner space 8 of the filter insert 6 via the suckaway slot 29 may take place for a specific period of time until the rotary drive has moved the backwash body 22, for example, through at least 360 ° opposite to the normal direction of rotation P when the inside of the filter wall is cleaned off by means of the washing gap. After this period of time has elapsed, a reversal in direction can then take place once again, in order to resume local backwashing action directly on the inside of the filter wall by means of the washing gap 24.

Reference is also made, then, to Fig. 6 which shows an exemplary embodiment of an especially preferred modular set-up of the backwash body 22. The hollow shaft 30 consists of a tubular portion with a partial segment cutout 32 in the annular wall 31, and this tubular portion is open at the upper and at the lower end. The backwash body 22 with the ring segment portion 26 and with the chamber portion 27, which is integrally formed thereon and on the radially outer end face 23 of which the suckaway slot 24 is formed, consists, as seen over the axial height, of a plurality of identical segments 22A, with the result that, when different hollow shafts 30 are used, backwash bodies 22 with different overall heights can be obtained for reversible-flow filters having different overall heights, with the diameter of the filter insert being the same. Each segment portion 22A has the relatively wide orifice for the suckaway slot 29 on the rear side of the ring segment portion 26 and the orifices for the washing gap 24 on the end face 23 of the chamber portion 27. Here, both the washing gap 24 and preferably also the suckaway slot 29 are in each case interrupted in the middle of the individual segments 22A by a short connecting web 41 which ensures the stability of the individual segments 22A of the backwash body 22. If appropriate, the connecting web may also extend inside the chamber of the box portion 27. Consequently, in relation to the entire backwash body 22, the individual segments 22A only ever form an axial subsection of the washing gap 24 and of the suckaway slot 29. The lowermost segment 22A is closed by means of a first cover plate 42 which is at the bottom of the backwash body 22 and via which both the associated inner chamber at least of this segment and the slot 24 are closed so as to seal off downwards. A second cover plate 43, which like the lower cover plate 42 has the same outer contour as the individual segment portions 22A, correspondingly closes the slot 24, the segment cutout 29 and the chamber of the box portion 27 on the upper segment 22A of the backwash body 22. The two cover plates 42, 43 are braced with one another by means of a tie rod 44 which passes through the chambers 28 of all the box portions 27 of the individual segments 22A and is provided at its ends with internal threads, into which fastening screws 45 are screwed through the cover plates 42, 43. The individual segments 22A are placed one on the other with an exact fit by means of mutually engaging dowel pins 67 and dowel holes 66 and are interlocked. In the exemplary embodiment shown, the upper cover plate 43 is provided with two nose webs 46 which are bent round upwards and which lie offset to one another at 180 ° with respect to the axis of rotation of the backwash body 22 and in operational use form, with two of their side flanks, the driving noses with which the driving pin, not shown here and connected to the hollow shaft 30, alternately comes into contact during a reversal in direction of rotation, since the hollow shaft 30 can be rotated through 180 ° in relation to the backwash body, without the backwash body 22 being moved. Either the backwash gap 24 or the wash slot 29 is then connected fluidically to the cavity 33 of the hollow shaft 30 as a function of the rotary position.

The two brush strips 25 can be latched on both sides of the suckaway slot 24 in grooves 47, which are formed on both sides of the washing gap 24 on the end face 23, and are cut approximately, as desired, to a suitable length, depending on the height of the overall backwash body 22.

Fig. 7 shows an alternative exemplary embodiment of the set-up and shape of a backwash body 122 for a backwash device with a preferably modular set-up of the backwash body. Functionally identical components are designated by reference symbols increased by 100. Inside the filter wall 106, a backwash body 122 is arranged rotatably about the central axis of rotation, is of preferably segment-like or modular construction and has in each case a segment portion 126 provided with the suckaway slot 129 and a radially projecting box portion 127. The box portion 127 is formed integrally on the walls 126A, 126B of the segment portion 126, the walls 126A, 126B being flat on the outside here and being provided on the inside in each case with a trough 175 and thereby forming a receptacle for the hollow shaft. The washing gap 124 is formed on the end face 123 of the box portion and lies opposite the inner surface area of the filter wall 106. The box portion 127 consists of a first chamber wall 127A and of a second chamber wall 127B which are formed integrally with the walls 126A, 126B, preferably consist of a suitable plastic and are connected in a distortion-resistant manner to one another in a way not shown, for example via transverse webs. The washing gap 124 is formed between the end faces 123A, 123B of the chamber walls 127A, 127B. The end face 123A of the first chamber wall 127A extends here partially, with a subsection 171 projecting radially in a wedge-like manner, nearer to the surface of the filter wall 106 than the end face 123B of the other chamber wall 127B. The subsection 171 forms a collar web which reaches virtually up to the filter wall 106 and, where appropriate, bears against the latter in the manner of a scraper. It can be sufficiently flexible not to block the rotation of the backwash body 122 during clockwise rotation here. In this direction of rotation, the rear side of the collar web points forwards. The subsection 171 at the same time forms with the surface facing the gap 124 a cross-flow run-in slope. The end face 123B of the second chamber wall 127B has a first zone 173 remote from the washing gap and a second zone 172 near the washing gap. In the region of the zone 172 near the washing gap, the distance of the end face 123B to the surface of the filter wall 106 is greater than on subsection 171 of the end face 123A of the other chamber wall 127A, but smaller than in the first zone 173. Owing to the narrower gap interspace between the zone 172 and the filter wall than in the zone 173 more remote from the washing gap, with the assistance of the barrier action of the subsection 171 which prevents cross flow between the end wall 123A and the filter wall 106, not only is a cross flow upstream of the end face 123B of the second chamber wall 127B generated, but a Bernoulli effect in the washing gap 124 is also brought about, which further improves the flow characteristic and consequently the cleaning or backwashing action. The subsection 171 and the second zone 172 delimit the washing gap 124. At the same time, the distance between the chamber walls 127A, 127B and therefore the clear width inside the box portion 127 narrow to the greatest extent adjacently to the washing gap 124, while a further smaller narrowing is formed at about half the radial length of the chamber walls 127A, 127B. The suckaway slot 129, the segment cutout 132 in the hollow shaft 130 and the clear distance between the chamber walls 127A, 127B have the same dimension at the segment portion 126.

A groove 147 for receiving a sealing lip or brush strip 125 which touches the inside of the filter wall 106 is formed laterally and outside the subsection 171 on the end face 123A of the first chamber wall 127A. There is no brush strip arranged on the chamber wall 127B so that a cross flow can take place there.

A person skilled in the art may gather from the above description numerous modifications which should come within the scope of protection of the accompanying claims. The exemplary embodiment shown in Fig. 6 constitutes an especially advantageous exemplary embodiment, although the backwash body could also consist of a monolithic body and the reversal in direction could be initiated even after a smaller angle of rotation or after a larger angle of rotation if an even larger suckaway slot is desired. The segment cutout could therefore also have a greater width than the inner chamber in the box portion, in order to shift the ratio further in favour of a larger suckaway slot.

## Claims

1. Reversible-flow filter with a filter housing (1), with an inlet (7) for unfiltered fluid, with a filter insert (5) arranged in the filter housing (1) and having a cylindrical filter wall (6), the inner space (8) of the said filter insert being connected to the fluid inlet, with an outlet (9) for filtered fluid, and with a backwash device (20) which is arranged in the inner space of the filter insert and is rotatable about the axis (D) of the filter insert (5) and which has a backwash body (22) with a washing gap (24), reaching near to the surface of the filter wall (6), for cleaning off the inside of the filter wall (6) in backwash operation, the backwash device (20) being coupled at one axial end to a rotary drive (11) and being connected at its other axial end to a sludge discharge (16), **characterized in that**, the backwash body (22) is provided with a suckaway slot (29) which is being openable into the inner space and is separate from the washing gap (24) and the opening cross section of which is larger than the opening cross section of the washing gap (24), and **in that** the backwash device (20) has a hollow shaft (30) which is partially movable in relation to the backwash body (22) and is rotatable about the axis of rotation by means of the rotary drive (11) and via which the washing gap (24) or the suckaway slot (29) is connectable to the sludge discharge (16) as a function of the relative position between the backwash body (22) and hollow shaft (30).

2. Reversible-flow filter according to Claim 1, **characterized in that** the ratio of the opening cross sections of the suckaway slot (29) to those of the washing gap (24) is greater than 2, preferably greater than 3 and especially greater than 5.

3. Reversible-flow filter according to Claim 1 or 2, **characterized in that** the washing gap (24) extends parallel to the axis of rotation (D) over the height of the backwash body (22).

4. Reversible-flow filter according to one of Claims 1 to 3, **characterized in that** the backwash body (22) has a ring segment portion (26), which is preferably formed concentrically to the axis of rotation (D), for receiving the hollow shaft (30), and a radially projecting box portion (27), on the end face (23) of which the washing gap (24) is formed, wherein preferably, the suckaway slot (29) is formed on the ring segment portion (26), with the backwash body (22) preferably being formed symmetrically to a mid-plane which passes through the axis of rotation (D).

5. Reversible-flow filter according to Claim 1 or 4, **characterized in that** sealing lips and/or brush strips (25) which touch the inside of the filter wall (6) are arranged on the end face of the backwash body (22), preferably on the end face of the box portion (27), on both sides of the washing gap (24).

6. Reversible-flow filter according to one of Claims 1 to 3, **characterized in that** the backwash body (122) has a segment portion (126), provided with the suckaway slot (129), for the rotatable reception of the hollow shaft (130), and a radially projecting box portion (127), on the end face (123) of which the washing gap (124) is formed, wherein preferably, the box portion (127) has a first chamber wall (127A) and a second chamber wall (127B), between the end faces (123A, 123B) of which the washing gap (124) is formed, the end face (123A) of the first chamber wall (127A) extending at least partially with a subsection (171) nearer to the surface of the filter wall (106) than the end face (123B) of the other chamber wall (127B).

7. Reversible-flow filter according to Claim 6, **characterized in that** the subsection (171) forms a cross-flow run-in slope and/or the end face (123B) of the second chamber wall (127B) forms a first zone (173) remote from the washing gap and a second zone (172) near the washing gap in which the distance to the surface of the filter wall is greater than on the subsection (171) and smaller than in the first zone (173), wherein preferably, the subsection (171) and the second zone (172) delimit the washing gap (124) and narrow it in relation to the distance between the chamber walls (127A, 127B).

8. Reversible-flow filter according to Claim 6 or 7, **characterized in that** a sealing lip and/or brush strip (125) which touches the inside of the filter wall (106) is arranged only on the end face (123A) of the first chamber wall (123A), preferably laterally and outside the subsection (171).

9. Reversible-flow filter according to one of Claims 1 to 8, **characterized in that** the hollow shaft (30; 130) has a segment cutout (32; 132) on the circumference, wherein preferably, the clear width of the segment cutout (32; 132) is approximately identical to the clear width of the suckaway slot (29; 129) and/or to the clear width inside the backwash body (22; 122), the clear width preferably tapering inside the box portion (27; 127) towards the washing gap (24; 124).

10. Reversible-flow filter according to one of Claims 1 to 9, **characterized in that** the backwash body (22) is composed of a plurality of segments (22A), each segment (22A) forming an axial subsection of the washing gap (24) and of the suckaway slot (29), wherein preferably, the segments (22A) are clamped between two cover plates (42; 43), by means of which the inner region of the end segments (22A) and also the suckaway slot (29) and the washing gap (24) are closable at the axial ends of the wash body (22).

11. Reversible-flow filter according to Claim 10, **characterized in that** the segments (22A) of the backwash body (22) are penetrated by an anchor tube (44) which is arranged parallel to the axis of rotation (D) and in the ends of which tension screws (45) for clamping the segments (22A) between the cover plates (42; 43) are screwed.

12. Reversible-flow filter according to one of Claims 1 to 11, **characterized in that** the hollow shaft (30) is provided with a driving pin (36) and the backwash body (22) is provided with at least one driving nose (28A, 28B; 46).

13. Reversible-flow filter according to any one of Claims 10 to 12, **characterized in that** the driving nose (46) is formed on one of the cover plates (43), or the backwash body (22) is provided with two driving noses (46), and, in the case of a reversal in direction of rotation, the hollow shaft (30) is rotatable by means of the driving pin (36) preferably through 180° between the driving noses (46), without the backwash body (22) being driven.

14. Reversible-flow filter according to one of Claims 10 to 13, **characterized in that** the driving pin (36) and the driving noses (28A, 28B; 46) are positioned outside the filter insert (5) in a lid part (3) of the filter housing (1).

15. Reversible-flow filter according to one of Claims 1 to 14, **characterized in that** the filter housing (1) is designed essentially cylindrically, the filter inlet (7) being arranged at the bottom of the filter housing (1), the filtrate outlet (9) on the circumference of the filter housing (1), the sludge discharge (16) at the bottom of the filter housing (1) in the centre of the filter inlet (7), and the rotary drive (11) on the lid part (3) of the filter housing.

## Patentansprüche

1. Rückspülfilter mit einem Filtergehäuse (1), mit einem Einlass (7) für unfiltriertes Fluid, mit einem im Filtergehäuse (1) angeordneten Filtereinsatz (5) mit zylindrischer Filterwand (6), dessen Innenraum (8) an den Fluideinlass angeschlossen ist, mit einem Auslass (9) für filtriertes Fluid, und mit einer im Innenraum des Filtereinsatzes angeordneten, um die Achse (D) des Filtereinsatzes (5) drehbaren Rückspüleinrichtung (20), die einen Rückspülkörper (22) mit einem bis nahe an die Oberfläche der Filterwand (6) heranreichenden Spülspalt (24) zum Abreinigen der Innenseite der Filterwand (6) im Rückspülbetrieb aufweist, wobei die Rückspüleinrichtung (20) an einem axialen Ende mit einem Drehantrieb (11) gekoppelt ist und an ihrem anderen axialen Ende an einen Schlammablass (16) angeschlossen ist, **dadurch gekennzeichnet, dass** der Rückspülkörper (22) mit einem in den Innenraum öffenbaren, vom Spülspalt (24) separaten Absaugschlitz (29) versehen ist, dessen Öffnungsquerschnitt größer ist als der Öffnungsquerschnitt des Spülspaltes (24), und dass die Rückspüleinrichtung (20) eine relativ zum Rückspülkörper (22) partiell bewegbare, mittels des Drehantriebs (11) um die Drehachse drehbare Hohlwelle (30) aufweist, über die in Abhängig von der Relativstellung zwischen Rückspülkörper (22) und Hohlwelle (30) der Spülspalt (24) oder der Absaugschlitz (29) an den Schlammablass (16) anschließbar ist.

2. Rückspülfilter nach Anspruch 1, **dadurch gekennzeichnet, dass** das Verhältnis der Öffnungsquerschnitte von Absaugschlitz (29) zu Spülspalt (24) größer ist als 2, vorzugsweise größer ist als 3 und insbesondere größer ist als 5.

3. Rückspülfilter nach Anspruch 1 oder 2, **dadurch gekennzeichnet, dass** sich der Spülspalt (24) parallel zur Drehachse (D) über die Höhe des Rückspülkörpers (22) erstreckt.

4. Rückspülfilter nach einem der Ansprüche 1. bis 3, **dadurch gekennzeichnet, dass** der Rückspülkörper (22) einen vorzugsweise konzentrisch zur Drehachse (D) ausgebildeten Ringsegmentabschnitt (26) zur Aufnahme der Hohlwelle (30) und einen radial vorkragenden Kastenabschnitt (27) aufweist, an dessen Stirnseite (23) der Spülspalt (24) ausgebildet ist, wobei vorzugsweise der Absaugschlitz (29) am Ringsegmentabschnitt (26) ausgebildet ist, wobei vorzugsweise der Rückspülkörper (22) symmetrisch zu einer Mittelebene ausgebildet ist, die durch die Drehachse (D) hindurchgeht.

5. Rückspülfilter nach einem der Ansprüche 1 bis 4, **dadurch gekennzeichnet, dass** an der Stirnseite des Rückspülkörpers (22), vorzugsweise an der Stirnseite des Kastenabschnittes (27), zu beiden Seiten des Spülspaltes (24) Dichtlippen und/oder Bürstenleisten (25) angeordnet sind, welche die Innenseite der Filterwand (6) berühren.

6. Rückspülfilter nach einem der Ansprüche 1 bis 3, **dadurch gekennzeichnet, dass** der Rückspülkörper (122) einen mit dem Absaugschlitz (129) versehen Segmentabschnitt (126) zur drehbaren Aufnahme der Hohlwelle (130) und einen radial vorkragenden Kastenabschnitt (127) aufweist, an dessen Stirnseite (123) der Spülspalt (124) ausgebildet ist, wobei vorzugsweise der Kastenabschnitt (127) eine erste Kammerwand (127A) und eine zweite Kammerwand (127B) aufweist, zwischen deren Stirnenden (123A, 123B) der Spülspalt (124) ausgebildet ist, wobei die Stirnseite (123A) der ersten Kammerwand (127A) zumindest partiell mit einem Teilabschnitt (171) näher an die Oberfläche der Filterwand (106) heranreicht als die Stirnseite (123B) der anderen Kammerwand (127B).

7. Rückspülfilter nach Anspruch 6, **dadurch gekennzeichnet, dass** der Teilabschnitt (171) eine Querstromeinlaufschräge bildet und/oder die Stirnseite (123B) der zweiten Kammerwand (127B) eine erste, spülspaltferne Zone (173) und eine zweite, spültspaltnahe Zone (172) bildet; in welcher der Abstand zur Oberfläche der Filterwand größer ist als am Teilabschnitt (171) und kleiner als in der ersten Zone (173), wobei vorzugsweise der Teilabschnitt (171) und die zweite Zone (172) den Spülspalt (124) begrenzen und relativ zum Abstand der Kammerwände (127A, 127B) verengen.

8. Rückspülfilter nach Anspruch 6 oder 7, **dadurch gekennzeichnet, dass** nur an der Stirnseite (123A) der ersten Kammerwand (123A), vorzugsweise seitlich und außerhalb des Teilabschnitts (171) eine Dichtlippe und/oder Bürstenleiste (125) angeordnet ist, welche die Innenseite der Filterwand (106) berührt.

9. Rückspülfilter nach einem der Ansprüche 1 bis 8, **dadurch gekennzeichnet, dass** die Hohlwelle (30; 130) am Umfang eine Segmentaussparung (32; 132) aufweist, wobei vorzugsweise die lichte Weite der Segmentaussparung (32; 132) näherungsweise gleich groß ist wie die lichte Weite des Absaugschlitzes (29; 129) und/oder die lichte Weite im Innern des Rückspülkörpers (22; 122), wobei sich vorzugsweise die lichte Weite im Innern des Kastenabschnitts (27; 127) zum Spülspalt (24; 124) hin verjüngt.

10. Rückspülfilter nach einem der Ansprüche 1 bis 9, **dadurch gekennzeichnet, dass** der Rückspülkörper (22) aus mehreren Segmenten (22A) zusammengesetzt ist, wobei jedes Segment (22A) einen axialen Teilabschnitt des Spülspaltes (24) und des Absaugschlitzes (29) bildet, wobei vorzugsweise die Segmente (22A) zwischen zwei Abdeckblechen (42; 43) eingespannt sind, mit denen der Innenbereich der endseitigen Segmente (22A) sowie der Absaugschlitz (29) und der Spülspalt (24) an den axialen Enden des Spülkörpers (22) verschließbar sind.

11. Rückspülfilter nach Anspruch 10, **dadurch gekennzeichnet, dass** die Segmente (22A) des Rückspülkörpers (22) von einem parallel zur Drehachse (D) angeordneten Ankerrohr (44) durchgriffen sind, in dessen Enden Spannschrauben (45) zum Einspannen der Segmente (22A) zwischen den Abdeckblechen (42; 43) eingeschraubt sind.

12. Rückspülfilter nach einem der Ansprüche 1 bis 11, **dadurch gekennzeichnet, dass** die Hohlwelle (30) mit einem Mitnehmerstift (36) und der Rückspülkörper (22) mit wenigstens einer Mitnahmenase (28A, 28B; 46) versehen ist.

13. Rückspülfilter nach einem der Ansprüche 10 bis 12, **dadurch gekennzeichnet, dass** die Mitnahmenase (46) an einem der Abdeckbleche (43) ausgebildet ist, oder dass der Rückspulkörper (22) mit zwei Mitnahmenasen (46) versehen ist und die Hohlwelle (30) bei einer Drehrichtungsumkehr mit dem Mitnehmerstift (36) um vorzugsweise 180° zwischen den Mitnahmenasen (46) ohne Mitnahme des Rückspülkörpers (22) verdrehbar ist.

14. Rückspülfilter nach einem der Ansprüche 10 bis 13, **dadurch gekennzeichnet, dass** der Mitnehmerstift (36) und die Mitnahmenasen (28A, 28B; 46) außerhalb des Filtereinsatzes (5) in einem Deckelteil (3) des Filtergehäuses (1) positioniert sind.

15. Rückspülfilter nach einem der Ansprüche 1 bis 14, **dadurch gekennzeichnet, dass** das Filtergehäuse (1) im Wesentlichen zylindrisch ausgebildet ist, wobei der Filtereinlass (7) am Boden des Filtergehäuses (1), der Filtratauslass (9) am Umfang des Filtergehäuses (1), der Schlammablass (16) am Boden des Filtergehäuses (1) im Zentrum des Filtereinlasses (7) und der Drehantrieb (11) am Deckelteil (3) des Filtergehäuses angeordnet sind.

## Revendications

1. Filtre à flux réversible comprenant un boîtier de filtre (1), comprenant une entrée (7) pour du fluide non filtré, comprenant un insert de filtre (5) agencé dans le boîtier de filtre (1) et ayant une paroi cylindrique de filtre (6), l'espace intérieur (8) dudit insert de filtre étant relié à l'entrée de fluide, comprenant une sortie (9) pour du fluide filtré, et comprenant un dispositif de lavage à contre-courant (20) qui est agencé dans l'espace intérieur de l'insert de filtre et est rotatif autour de l'axe (D) de l'insert de filtre (5) et qui a un corps de lavage à contre-courant (22) avec un espace de lavage (24), qui atteint presque la surface de la paroi de filtre (6), pour nettoyer l'intérieur de la paroi de filtre (6) lors d'une opération de lavage à contre-courant, le dispositif de lavage à contre-courant (20) étant accouplé, à une extrémité axiale, à un entraînement rotatif (11) et étant relié, à son autre extrémité axiale, à une évacuation de boue (16), **caractérisé en ce que** le corps de lavage à contre-courant (22) est pourvu d'une fente d'évacuation par aspiration (29) qui peut être ouverte dans l'espace intérieur et est séparée de l'espace de lavage (24), et dont la section transversale d'ouverture est plus grande que la section transversale d'ouverture de l'espace de lavage (24), et **en ce que** le dispositif de lavage à contre-courant (20) a un arbre creux (30) qui est partiellement mobile par rapport au corps de lavage à contre-courant (22) et est rotatif autour de l'axe de rotation au moyen de l'entraînement rotatif (11), et par le biais duquel l'espace de lavage (24) ou la fente d'évacuation par aspiration (29) peut être relié(e) à l'évacuation de boue (16) en fonction de la position relative entre le corps de lavage à contre-courant (22) et l'arbre creux (30).

2. Filtre à flux réversible selon la revendication 1, **caractérisé en ce que** le rapport des sections transversales d'ouverture de la fente d'évacuation par aspiration (29) à celles de l'espace de lavage (24) est supérieur à 2, de préférence supérieur à 3, et particulièrement supérieur à 5.

3. Filtre à flux réversible selon la revendication 1 ou 2, **caractérisé en ce que** l'espace de lavage (24) s'étend parallèlement à l'axe de rotation (D) sur la hauteur du corps de lavage à contre-courant (22).

4. Filtre à flux réversible selon l'une des revendications 1 à 3, **caractérisé en ce que** le corps de lavage à contre-courant (22) a une portion de segment annulaire (26), qui est de préférence formée de manière concentrique à l'axe de rotation (D), pour recevoir l'arbre creux (30), et une portion de boîte saillant radialement (27), sur la face d'extrémité (23) de laquelle est formé l'espace de lavage (24), la fente d'évacuation par aspiration (29) étant de préférence formée sur la portion de segment annulaire (26), le corps de lavage à contre-courant (22) étant de préférence formé symétriquement par rapport à un plan médian qui passe par l'axe de rotation (D).

5. Filtre à flux réversible selon la revendication 1 ou 4, **caractérisé en ce que** des lèvres d'étanchéité et/ou des bandes de brosses (25) qui sont en contact avec l'intérieur de la paroi de filtre (6) sont agencées sur la face d'extrémité du corps de lavage à contre-courant (22), de préférence sur la face d'extrémité de la portion de boîte (27), des deux côtés de l'espace de lavage (24).

6. Filtre à flux réversible selon l'une des revendications 1 à 3, **caractérisé en ce que** le corps de lavage à contre-courant (122) a une portion de segment (126), pourvue de la fente d'évacuation par aspiration (129), pour recevoir de manière rotative l'arbre creux (130), et une portion de boîte saillant radialement (127), sur la face d'extrémité (123) de laquelle l'espace de lavage (124) est formé, la portion de boîte (127) ayant de préférence une première paroi de chambre (127A) et une deuxième paroi de chambre (127B), entre les faces d'extrémité (123A, 123B) desquelles l'espace de lavage (124) est formé, la face extrémité (123A) de la première paroi de chambre (127A) s'étendant au moins partiellement avec une sous-section (171) plus proche de la surface de la paroi de filtre (106) que la face d'extrémité (123B) de l'autre paroi de chambre (127B).

7. Filtre à flux réversible selon la revendication 6, **caractérisé en ce que** la sous-section (171) forme une pente d'entrée de flux transversal et/ou la face d'extrémité (123B) de la deuxième paroi de chambre (127B) forme une première zone (173) éloignée de l'espace de lavage et une deuxième zone (172) proche de l'espace de lavage dans laquelle la distance à la surface de la paroi de filtre et supérieure à celle de la sous-section (171) et inférieure à celle de la première zone (173), la sous-section (171) et la deuxième zone (172) délimitant de préférence l'espace de lavage (124) et le réduisant par rapport à la distance entre les parois de chambre (127A, 127B).

8. Filtre à flux réversible selon la revendication 6 ou 7, **caractérisé en ce qu'**une lèvre d'étanchéité et/ou une bande de brosses (125) qui est/sont en contact avec l'intérieur de la paroi de filtre (106) est/sont agencée(s) seulement sur la face d'extrémité (123A) de la première paroi de chambre (123A), de préférence latéralement et à l'extérieur de la sous-section (171).

9. Filtre à flux réversible selon l'une des revendications 1 à 8, **caractérisé en ce que** l'arbre creux (30 ; 130) a une découpe de segment (32 ; 132) sur la circonférence, la largeur libre de la découpe de segment (32 ; 132) étant de préférence approximativement identique à la largeur libre de la fente d'évacuation par aspiration (29 ; 129) et/ou à la largeur libre à l'intérieur du corps de lavage à contre-courant (22 ; 122), la largeur libre s'effilant de préférence à l'intérieur de la portion de boîte (27 ; 127) en direction de l'espace de lavage (24 ; 124).

10. Filtre à flux réversible selon l'une des revendications 1 à 9, **caractérisé en ce que** le corps de lavage à contre-courant (22) est composé d'une pluralité de segments (22A), chaque segment (22A) formant une sous-section axiale de l'espace de lavage (24) et de la fente d'évacuation par aspiration (29), les segments (22A) étant de préférence serrés entre deux plaques de recouvrement (42 ; 43), au moyen desquelles la région intérieure des segments d'extrémité (22A) et également la fente d'évacuation par aspiration (29) et l'espace de lavage (24) peuvent être fermés aux extrémités axiales du corps de lavage (22).

11. Filtre à flux réversible selon la revendication 10, **caractérisé en ce que** les segments (22A) du corps de lavage à contre-courant (22) sont pénétrés par un tube d'ancrage (44) qui est agencé parallèlement à l'axe de rotation (D) et dans les extrémités duquel sont vissées des vis de tension (45) pour serrer les segments (22A) entre les plaques de recouvrement (42 ; 43).

12. Filtre à flux réversible selon l'une des revendications 1 à 11, **caractérisé en ce que** l'arbre creux (30) est pourvu d'une goupille d'entraînement (36) et le corps de lavage à contre-courant (22) est pourvu d'au moins un ergot d'entraînement (28A, 28B ; 46).

13. Filtre à flux réversible selon l'une quelconque des revendications 10 à 12, **caractérisé en ce que** l'ergot d'entraînement (46) est formé sur l'une des plaque de recouvrement (43), ou le corps de lavage à contre-courant (22) est pourvu de deux ergots d'entraînement (46) et, en cas d'inversion du sens de rotation, l'arbre creux (30) peut être entraîné en rotation au moyen de la goupille d'entraînement (36) de préférence sur 180° entre les ergots d'entraînement (46), sans que le corps de lavage à contre-courant (22) ne soit entraîné.

14. Filtre à flux réversible selon l'une des revendications 10 à 13, **caractérisé en ce que** la goupille d'entraînement (36) et les ergots d'entraînement (28A, 28B ; 46) sont disposés à l'extérieur de l'insert de filtre (5) dans une partie de couvercle (3) du boîtier de filtre (1).

15. Filtre à flux réversible selon l'une des revendications 1 à 14, **caractérisé en ce que** le boîtier de filtre (1) est conçu essentiellement de manière cylindrique, l'entrée de filtre (7) étant agencée au fond du boîtier de filtre (1), la sortie de filtrat (9) sur la circonférence du boîtier de filtre (1), l'évacuation de boue (16) au fond du boîtier de filtre (1) au centre de l'entrée de filtre (7), et l'entraînement rotatif (11) sur la partie de couvercle (3) du boîtier de filtre.
